# EUROPEAN PATENT APPLICATION

(11) **EP 2 610 720 A1**
(43) Date of publication of application: **03.07.2013**
(21) Application number: 11196148.8
(22) Date of filing: 30.12.2011
(51) Int. Cl.: G06F 3/048, H04M 1/725

(54) **Method and apparatus pertaining to the presentation of scrolling icons**

(71) Applicant: Research In Motion Limited, Waterloo, ON N2L 3W8 (CA)
(72) Inventor: Gardenfors, Dan Zacharias, SE-211 40 Malmö (SE)
(74) Representative: Bryn-Jacobsen, Caelia

(57) **Abstract**

A control circuit applies at least one prioritization metric to select some icons of a plurality of icons to provide selected icons and then scrolls a display of the icons. While scrolling the display of the icons the selected icons are displayed in a highlighted form and the non-selected icons are displayed in a non-highlighted form. By one approach, the displayed highlighted and non-highlighted icons are displayed without regard to a sequential order of presentation.

## Description

### Field of Technology

The present disclosure relates to electronic devices, including but not limited to portable electronic devices having touch-sensitive displays and their control.

### Background

The amount of data that a digital device can store often surpasses the amount of data that a user can conveniently or immediately manage. Digital devices can have hundreds of installed applications and widgets. Users' digital media collections can consist of thousands of image, music and video files. This means that users must look through lists of numerous items when they want to locate a specific item, such as a contact in a contact list, a file in a folder, or an application from an application list.

To facilitate browsing and selection amongst such choices, digital devices typically present visual representations of available files/apps on a display. The visual representations are often icons, text or graphical items arranged in lists that users can scroll through when looking for a specific item. This approach puts a strain on the graphics rendering system since the latter must continuously update the graphics on the display during scrolling or browsing. The more available items in a list, the more energy will be consumed by the system when rendering the visual representations of these items. The process of browsing for a specific file/app is also presents effort to the user, since a long list requires extensive scrolling when looking for a specific item.

Browsing for data can also be time-consuming. This is especially problematic when a device is downloading data over a limited connection, such as a wireless Internet connection. When data transfer is slow, the visual rendering of icons and list items is delayed, and this hinders the user from quickly locating and accessing the wanted information. This problem is often seen when downloading web pages that contain a lot of video or graphics.

When loading a web page in a web browser, visual items are typically rendered on the display as soon as they are downloaded. The order in which these items appear on the display usually appears to be random to the user and the visual transition between an empty and a full web page typically does not convey any cognitive information to the user.

Similarly, the visual icons that represent files in an operating system such as Windows or OSX need to be loaded when a user opens a folder in a file explorer. The icons typically have predetermined positions in the file explorer window since they can be sorted alphabetically, chronologically, or spatially in a sequence previously defined by the user or by the operating system. In many cases, when opening a folder, the visual icons are loaded in a sequence that is dependent on file size.

When users scroll lists of content on digital devices, visual representations of the content must be loaded continuously to allow the lists to scroll quickly. Apart from rendering the currently visible items, the system can also preload the visual contents of list items that are adjacent to the currently visible items to allow these to be quickly rendered if the user would scroll the list so they appear. This can consume a lot of memory, especially on touch screen devices where users can "flick scroll" lists so they move at very high speeds.

### Brief Description of the Drawings

FIG. 1 is a flow diagram in accordance with the disclosure.

FIG. 2 is a top plan view in accordance with the disclosure.

FIG. 3 is a top plan view in accordance with the disclosure.

FIG. 4 is a block diagram in accordance with the disclosure.

FIG. 5 is a block diagram in accordance with the disclosure.

### Detailed Description

The following describes an apparatus and method pertaining to the display of icons while scrolling those icons. These teachings permit prioritized icons (such as, for example, icons for applications that the end user happens to use more frequently than others) to be displayed in an eye-catching way when the user scrolls a display of a plurality of icons. This, in turn, permits the user to readily and easily identify those relatively important icons during the scrolling process to facilitate locating such icons.

This method can comprise applying at least one prioritization metric to select some icons of a plurality of icons to provide selected icons and then scrolling a display of the icons. While scrolling the display of the icons the selected icons are displayed in a highlighted form and the non-selected icons are displayed in a non-highlighted form.

By one approach, the displayed highlighted and non-highlighted icons are displayed without regard to a sequential order of presentation. As a result, the highlighted and non-highlighted icons can be intermingled with one another.

These teachings will accommodate a wide variety of approaches in these regards. By one approach, the non-highlighted icons are "non-highlighted" by effectively abridging those icons to include less content as compared to a normal presentation thereof. In such a case, an unabridged (i.e., a "normal" presentation) comprises a highlighted form. By another approach, used in lieu of the foregoing or in combination therewith, a highlighted icon includes something in addition to a normal presentation.

By one approach, in response to concluding the aforementioned scrolling, these teachings will support automatically presenting all present-displayed icons using a normal form of presentation. Accordingly, the icons are all neither highlighted nor non-highlighted.

These teachings will also support a variety of approaches as regards selecting the particular icons to be highlighted and/or non-highlighted. By one approach, for example, these selections can be made as a function of one or more prioritization metrics. As one illustrative example in such regards, the prioritization metric can represent historical usage of applications as correspond to the icons. Using this approach, for example, only frequently-used applications are highlighted while scrolling.

So configured, a user can easily discern "important" icons while scrolling. This can permit a user to make effective use of their device even as the number of icons simultaneously appearing on their display increases and/or as the speed of their scrolling increases. These teachings are readily and economically applied in conjunction with numerous existing scrolling methodologies and can serve to greatly leverage the continued utility of those methodologies. The approaches disclosed herein are also highly scalable and can be employed with a wide variety and number of display paradigms, icons, and so forth.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

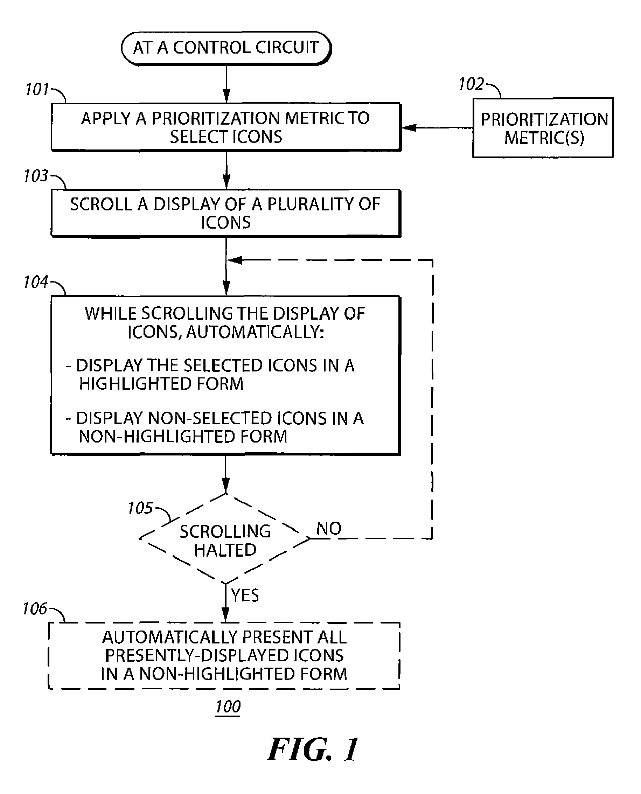

FIG. 1 presents an illustrative process 100 that can be carried out by a control circuit of a portable electronic device. This process 100 includes applying 101 a prioritization metric 102 to select one or more icons from amongst a plurality of icons. "Icon" will be understood to refer to traditional computer icons that comprise pictograms that are typically displayed on a computer screen and used to navigate a computer system or mobile device. Such display devices typically comprise a small picture or symbol that serves as a quick, intuitive representation of an application such as a software tool or function, or a data file accessible on the system. As used herein, "icon" will also be understood to include non-pictorial devices such as, for example, alphanumeric text. Generally speaking, an icon is a graphic element that functions as an electronic hyperlink, file shortcut, or the like to access or otherwise initiate or call up the corresponding application or information.

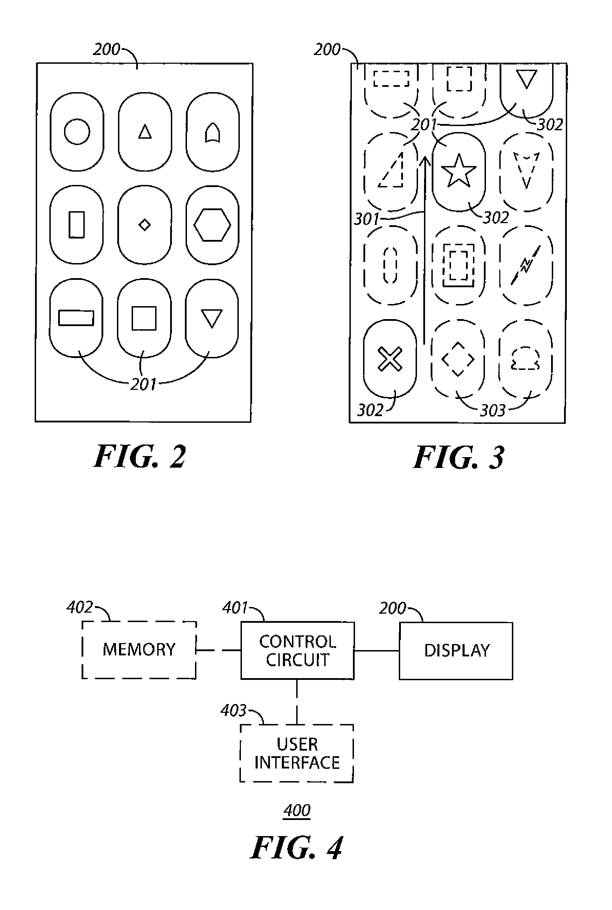

FIG. 2 provides an illustrative example of icons 201 on a touch-screen display 200. In this illustrative example, and without intending any limitations in these regards, each icon 201 comprises a virtual button of approximately the same general size. Each icon 201 also typically includes some differentiating visual content to permit the user to distinguish one icon 201 from another. As an example, one such icon 201, when touched by the user, might open a first email account inbox while another such icon 201 might open a second, different email account inbox. Depending upon the platform, there can literally be up to hundreds of thousands of possible icons available to display.

The prioritization metric 102 may include a determination of how frequently the application associated with each icon is launched (i.e., a frequency of use). The control circuit may keep track of how often the user specifically selects particular icons 201. The control circuit can then identify, for example, the most-frequently-accessed icons 201. In this case, the control circuit can select those most-frequently-accessed icons 201 as the "selected" icons. Of course, the control circuit can track any number of most-frequently-accessed icons 201 as desired. For example, the control circuit may track any specific number (such as the top five or the top twenty icons 201) or any relative percentage (such as the top ten percent) as desired.

As another illustrative example, the prioritization metric may include a determination of the total amount of time the application associated with each icon is executed on the device (i.e., a run time). The control circuit may keep track of the total durations of time that a user actively interacts with various available applications. The control circuit can then select the icons 201 that correspond to those most used (as a function of time) applications.

And as yet another illustrative example, the prioritization metric may include a determination of the amount of time that has passed since the application associated with each icon has been launched. The control circuit may keep track of icons 201 that remain unselected for some predetermined period of time. Using this approach, for example, all icons 201 that remain unselected for at least the previous, say, seven days can be selected.

This process 100 will accommodate other prioritization metrics as well as desired. For example, a specific prioritization metric can be dynamically determined as a function, at least in part, of what other applications may be simultaneously running or that were just previously running. By way of simple illustration, icons 201 for certain social networking applications such as Twitter may be selected when the user also has open (or just closed) an audio or video-streaming service application.

This process 100 also provides for scrolling 103 a display of the plurality of icons 201. As used herein, the term "scroll" or "scrolling" is used to refer to an act of advancing a plurality of items, such as icons displayed as an array or items displayed in a list format, wherein the total amount of items may not be viewable on the display screen 200 at the same time. The items may be advanced on a line-by-line, row-by-row, column-by-column, or page-by-page basis. This scrolling can be a response to detecting that the user has swiped their fingertip vertically (up or down) on the described touch-screen display 200. By another approach, this scrolling may occur in response to detecting that the user has manipulated a mechanical interface (such as a trackball, touchpad, scroll wheel, or the like) that the corresponding apparatus offers for this purpose.

While scrolling that display of the plurality of icons 201, the control circuit then automatically 104 presents the selected icons in a highlighted form while also presenting the non-selected icons in a non-highlighted form.

So configured, the particular icons 201 selected for highlighting and/or non-highlighting are based upon one or more prioritization metrics 102 of choice. These metrics can be pre-defined (for example, by the manufacturer of the control circuit) and/or can be defined (at least in part) by the user as desired.

By one approach, the prioritization metric 102 is implemented and the highlighted and non-highlighted icons 201 are displayed without regard to a sequential order of presentation. That is, the prioritization metric does not simply specify, for example, that the first ten displayed icons 201 are highlighted to the exclusion of all remaining displayed icons 201. Nor does this process require that the presentation of icons 201 be re-sorted in order to display the icons sequentially in accordance with the prioritization metric. Instead, icons 201 can be selected for highlighting and non-highlighting without regard to the relative position of such icons 201 within a displayed sequence of such icons 201. In other words, the icons 201 can be displayed in an original default order of presentation and the highlighting (or non-highlighting) can be performed non-sequentially in relation to the prioritization metric.

Typically there is an ordinary or default presentation form to use when displaying the icons 201; that is, a form of presentation that simply "is" the visual representation of the icon to use when simply presenting the icon to a user during ordinary and customary usage of the corresponding device. This form will typically be based upon specifications regarding the size, shape, color, and other content of the icon (often as inherently specified by a graphic element file (such as a TIF or JPEG file) of the icon itself). With that in mind, the foregoing references to highlighting and non-highlighting will be understood to comprise relative characterizations.

For example, by one approach a highlighted form can comprise a form that supplements an ordinary presentation of the icon 201. This supplementation can include such things as enlarging the size of the icon, altering a three-dimensional location of the icon, modifying hue, colorfulness, chroma, saturation, lightness, brightness, and/or contrast of the icon, using additional colors in conjunction with the icon, modifying transparency of all or part of the icon, and/or using a temporally-based changing element (such as flashing a part of the icon between two different colors), to note but a few examples in these regards. In such a case, the non-highlighted form may simply comprise the ordinary presentation form.

As another example, in lieu of the foregoing or in combination therewith, the non-highlighted form can comprise an abridged form where something has been redacted from the ordinary presentation form. This abridgement can comprise, for example, a reduced-color form, a grayscale form, a reduced-resolution form, a reduced-clarity form, a reduced-size form, an altered-depth form, a modified transparency (such as, for example, an increased transparency), or even an altered relative-orientation form, to again note but a few illustrative examples in these regards.

When using abridgement as an approach to providing a non-highlighted form, the highlighted form can comprise the default presentation form if desired. These teachings will also accommodate, however, supplementing the default presentation form to provide the highlighted form while also abridging the ordinary presentation form to provide the non-highlighted form.

FIG. 3 provides a simple, illustrative example in these regards. FIG. 3 captures a moment in time as the icons 201 are scrolling (as represented by the arrow denoted by reference numeral 301) on the touch-screen display 200. In this example, and at this moment, three of the icons 302 are the selected icons that are accordingly presented using a highlighted form (represented in FIG. 3 using solid lines) while the remaining unselected icons 201 are presented using a non-highlighted form (represented in FIG. 3 using dashed lines).

So configured, the highlighted icons 302 are considerably easier to identify as the icons 201 move on the touch-screen display 200. This ease of identification, in turn, makes it easier for the user to spot those icons as they move through the display area. Additionally, as the non-highlighted icons can require less information to be displayed, the processing resources needed to render the non-highlighted icon can be less than the resources needed to render the highlighted icons. Thus, the control circuit can have additional processing capability available when using the above process 100. One result of this additional processing capability is that the scrolling function can be presented in a quicker, smoother fashion with less delays or noticeable transitions than previously allowed.

Referring again to FIG. 1, this process 100 proves highly flexible in practice and accommodates a variety of related enhancements. As one example in these regards, when the control circuit optionally detects 105 that the aforementioned scrolling of the icons 201 has concluded (and then within a predetermined period of time, if desired, such as, for example, 0.3 seconds, 0.5 seconds, 1.0 seconds, and so forth) the control circuit can respond by automatically presenting 106 all presently-displayed icons in an ordinary form (which is to say, in neither a highlighted form or a non-highlighted form). Using this approach, the icons 201 are all displayed post-scrolling using a substantially similar (i.e., normalized) form notwithstanding that, while scrolling, some icons 201 were highlighted while others were non-highlighted.

There may, of course, be other reasons why a user might choose to have some of their icons highlighted or non-highlighted during ordinary use. For example, a user might wish to de-emphasize the appearance of icons that pertain to applications that require a communications link when no such link is presently available. The highlighting and non-highlighting described with respect to this process 100 can be readily applied in conjunction with such practices as desired. In practice, this might comprise, for example, further highlighting an already-highlighted icon when scrolling such an icon.

The above-described approaches are readily enabled using any of a wide variety of available and/or readily configured platforms, including partially or wholly programmable platforms as are known in the art or dedicated-purpose platforms as may be desired for some applications. Referring to FIG. 4, an illustrative approach in these regards will now be provided.

The enabling apparatus 400 can include portable electronic devices, for example, several types of mobile stations such as simple cellular telephones, smart telephones, wireless personal digital assistants (PDAs), and tablet-style computers. The enabling apparatus 400 can include a control circuit 401 that operably couples to a touch-screen display 200 as mentioned above. Such a control circuit 401 can comprise a fixed-purpose hard-wired platform or can comprise a partially or wholly programmable platform. All of these architectural options are well known and understood in the art and require no further description here. This control circuit 401 is configured (for example, by using corresponding programming as will be well understood by those skilled in the art) to carry out one or more of the actions and/or functions described herein.

This apparatus 400 can also optionally include a memory 402 that operably couples to the control circuit 401. The memory 402 may be integral to the control circuit 401 or can be physically discrete (in whole or in part) from the control circuit 401 as desired. This memory 402 can serve, for example, to non-transitorily store the computer instructions that, when executed by the control circuit 401, cause the control circuit 401 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM)).

This apparatus 400 can also include, if desired, a user interface 403 that is separate and apart from the aforementioned touch-screen display 200. Examples in these regards can include, but are not limited to, trackballs, trackpads, and scroll wheels.

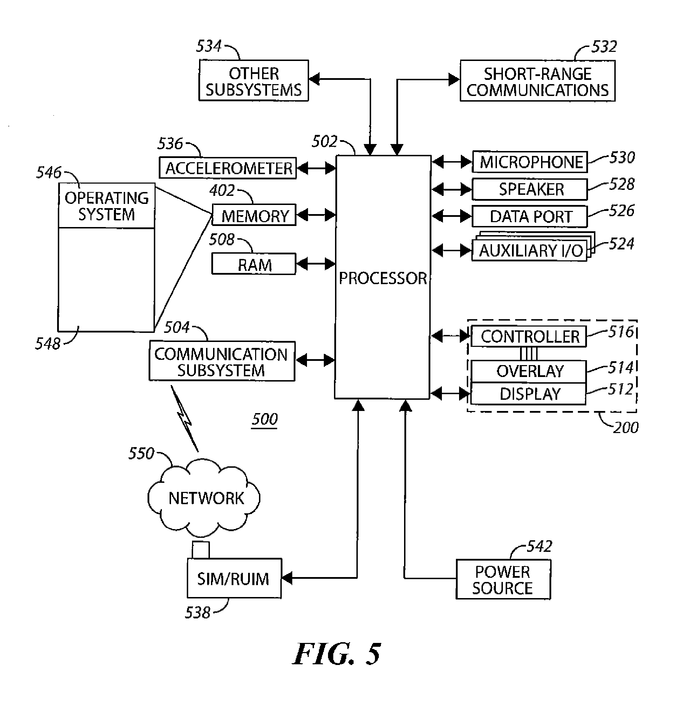

Without intending to limit the scope of the foregoing description, FIG. 5 presents an example portable electronic device 500 that is configured to comport with the present teachings. This device 500 includes a control circuit 401 implemented by way of a processor 502 that controls the overall operation of the portable electronic device 500. Communication functions, including data and voice communications, are performed through a communication subsystem 504. The communication subsystem receives messages from and sends messages to a wireless network 550. The wireless network 550 may be any type of wireless network, including, but not limited to, data wireless networks, voice wireless networks, and networks that support both voice and data communications. A power source 542, such as one or more rechargeable batteries or a port to an external power supply, powers the electronic device.

The processor 502 interacts with other elements, such as Random Access Memory (RAM) 508, the aforementioned memory 402, the various components of the touch-screen display 200 (these including, in this example, a display 512 with a touch-sensitive overlay 514 operably coupled to an electronic controller 516), one or more actuators 520, one or more force sensors 522, an auxiliary input/output (I/O) subsystem 524, a data port 526, a speaker 528, a microphone 530, a short-range communication subsystem 532, and other device subsystems 534 of choice.

One or more user interfaces are also provided. Input via a graphical user interface is provided via the touch-sensitive overlay 514. The processor 502 interacts with the touch-sensitive overlay 514 via the electronic controller 516. Information, such as the aforementioned icons 201 and other items that may be displayed or rendered on a portable electronic device, is displayed on the touch-screen display 200 via the processor 502.

The processor 502 may also interact with an accelerometer 536 that may be utilized to detect direction of gravitational forces or gravity-induced reaction forces.

To identify a subscriber for network access, the portable electronic device 500 may utilize a Subscriber Identity Module or a Removable User Identity Module (SIM/RUIM) card 538 for communication with a network, such as a wireless network 550. Alternatively, user identification information may be programmed into the memory 402.

The portable electronic device 500 includes an operating system 546 and software programs, applications, or components 548 that are executed by the processor 502 and are typically stored in a persistent, updatable store such as the memory 402. Additional applications or programs may be loaded onto the portable electronic device 500 through the wireless network 550, the auxiliary I/O subsystem 524, the data port 526, the short-range communications subsystem 532, or any other suitable subsystem 534.

For voice communications, the portable electronic device 500 can include a speaker 528 that outputs audible information converted from electrical signals, and a microphone 530 that converts audible information into electrical signals for processing.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope. As one simple illustrative example in these regards, the kind and/or degree of highlighting or non-highlighting employed can vary dynamically as the scrolling speed varies. This would permit maintaining some constancy with respect to one's ability to discern the difference between highlighting and non-highlighting regardless of the user's scrolling speed. As another simple example in these regards, these approaches can be applied with gesture-sensing systems that rely upon such things as cameras, proximity sensors, and/or motion sensors of various kinds to detect, for example, the end user's hand motions. To the extent that such an input mechanism can lead to the scrolling of a plurality of icons on a display these teachings are directly applicable.

## Claims

1. A method of operating a portable electronic device (400) comprising:
applying (101) at least one prioritization metric (102) to select some icons of a plurality of icons (201) to provide selected icons (302);
scrolling (103) a display of a plurality of icons;
while scrolling the display of the plurality of icons (104):
displaying the selected icons of the plurality of icons in a highlighted form; and
displaying the non-selected icons (303) of the plurality of icons in a non-highlighted form.

2. The method of claim 1 wherein the plurality of icons are displayed in a non-sequential order of presentation relative to the at least one prioritization metric.

3. The method of claim 1 wherein the prioritization metric represents, at least in part, usage of an application associated with each icon of the plurality of icons.

4. The method of claim 3 wherein the prioritization metric includes at least one of:
a frequency of use of the associated application;
a run time for the associated application; and
an amount of time lapsed since the associated application was launched.

5. The method of claim 1 wherein the non-highlighted form comprises at least one of:
a reduced-color form;
a grayscale form;
a reduced-resolution form;
a reduced clarity;
a reduced size;
an altered depth;
an altered relative orientation; and
a modified transparency.

6. The method of claim 1 wherein the highlighted form comprises a default presentation of the icon.

7. The method of claim 1 further comprising:
halting scrolling the display of the plurality of icons; and
within a predetermined time of halting scrolling the display of the plurality of icons, automatically displaying all presently-displayed icons of the plurality of icons in a default form.

8. The method of claim 1 wherein the highlighted form comprises a form that supplements a default presentation of the icon.

9. The method of claim 1 wherein at least some of the icons identify a corresponding application.

10. A portable electronic device (400) comprising:
a display (200);
a control circuit (401) operably coupled to the display and configured to:
apply (101) at least one prioritization metric (102) to select some icons of a plurality of icons (201) to provide selected icons (302);
scroll (103) a display of a plurality of icons;
while scrolling the display of the plurality of icons (104):
- display the selected icons of the plurality of icons in a highlighted form; and
- display the non-selected icons (303) of the plurality of icons in a non-highlighted form.

11. The portable electronic device of claim 10 wherein the prioritization metric represents, at least in part, usage of an application associated with each icon of the plurality of icons.

12. The portable electronic device of claim 11 wherein the prioritization metric represents, at least in part, usage of an application.

13. The portable electronic device of claim 10 wherein the non-highlighted form comprises at least one of:
a reduced-color form;
a grayscale form;
a reduced-resolution form;
a reduced clarity;
a reduced size;
an altered depth;
an altered relative orientation; and
a modified transparency.

14. The portable electronic device of claim 10 wherein the control circuit is further configured to:
halt scrolling the display of the plurality of icons; and
within a predetermined time of halting scrolling the display of the plurality of icons, automatically display all presently-displayed icons of the plurality of icons in a default form.

15. A non-transitory computer-readable media (402) having stored therein computer instructions, which, when executed by a computer, cause the computer to:
apply (101) at least one prioritization metric (102) to select some icons of a plurality of icons (201) to provide selected icons (302);
scroll (103) a display of a plurality of icons;
while scrolling the display of the plurality of icons (104):
- display the selected icons of the plurality of icons in a highlighted form; and
- display the non-selected icons (303) of the plurality of icons in a non-highlighted form.
